# EUROPEAN PATENT SPECIFICATION

(11) **EP 4 047 388 B1**
(45) Date of publication and mention of the grant of the patent: **24.07.2024**
(21) Application number: 22157804.0
(22) Date of filing: 21.02.2022
(51) Int. Cl.: G01S 7/481, G01S 7/497, G01S 17/08

(54) **RANGING APPARATUS, LIDAR AND MOBILE ROBOT**
ENTFERNUNGSMESSVORRICHTUNG, LIDAR UND MOBILER ROBOTER
APPAREIL DE TÉLÉMÉTRIE, LIDAR ET ROBOT MOBILE

(30) Priority: 22.02.2021 CN 202120392048 U; 31.05.2021 CN 202110601668
(43) Date of publication of application: 24.08.2022
(73) Proprietor: Shenzhen Camsense Technologies Co., Ltd, Shenzhen, Guangdong 518000 (CN)
(72) Inventor: LI, Le, Shenzhen, 518000 (CN); WEI, Chenxi, Shenzhen (CN); ZHOU, Kun, Shenzhen (CN)
(74) Representative: Bayramoglu et al.

(56) References cited:
- EP-A1- 2 711 667
- WO-A1-2020/098771
- JP-A- 2019 057 567
- US-A1- 2014 347 650

## Description

### FIELD

The present disclosure relates to the technical field of distance ranging, and in particular, relates to a ranging apparatus, a lidar having the ranging apparatus, and a mobile robot having the ranging apparatus.

### BACKGROUND

As the components and parts are miniaturized and the cost is low, spatial positioning technology is more and more popular. The spatial positioning technology can be applied to the field of autonomous navigation such as household mobile robots, unmanned aerial vehicles, unmanned vehicles, and the like. In spatial positioning technology, optical positioning technology is widely used because of its high precision and fast response.

In optical positioning technology, the most common ranging apparatus substantially includes a light emitting assembly and a light receiving assembly. The positioning method related to the ranging apparatus is usually a triangle ranging principle in which the measuring distance and precision are moderate, the response is fast, and the hardware cost is relatively low. Therefore, most consumer optical positioning apparatuses, such as lidars for floor mopping robots, widely adopt the triangle ranging principle.

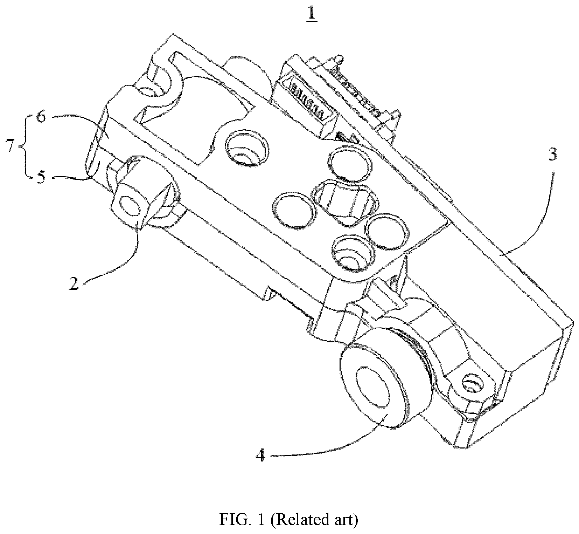

As shown in FIG. 1, a ranging apparatus 1 of the related art is shown. The ranging apparatus 1 may be based on the triangle ranging principle and mainly include a laser emitting assembly 2 and an image sensor assembly 3. The measuring principle of the ranging apparatus 1 is that the laser is emitted through the laser emitting assembly 2, target reflected light is captured by the image sensor assembly 3 through a light receiving assembly 4, and a signal response is generated at a certain area position of the image sensor assembly 3.

The ranging apparatus 1 may further include a module support 7 having a base 5 and an upper cover 6. The module support 7 is configured for mounting the laser emitting assembly 2, the light receiving assembly 4, and the image sensor assembly 3 thereon.

Although the ranging apparatus adopting the triangle ranging principle has high measurement precision for short-distance, the measurement precision for long-distance is poor; this makes the ranging apparatus adopting the triangle ranging principle difficult to apply to a long-distance measurement. WO 2020/098771 A1 discloses a laser radar system, comprising multiple transceiving modules for transmitting pulse laser beams and receiving echo signals, reflected by a target to be detected, of the pulse laser beams; and at least one scanning module for reflecting the pulse laser beams, transmitted by the multiple transceiving modules, to a three-dimensional space and for reflecting the echo signals to corresponding transceiving modules, wherein the multiple transceiving modules are arranged side by side, the scanning module is located at one side of the multiple transceiving modules, pulse lasers of the multiple transceiving modules all face towards the at least one scanning module, each transceiving module correspondingly detects one sub-scanning field of view, and multiple sub-scanning fields of view constitute a total field of view of the laser radar system through field-of-view splicing EP2711667 discloses a distance measuring device comprising an emitter and two receivers on a side of the emitter,

### SUMMARY

An embodiment of the present disclosure provides a ranging apparatus including: a laser emitting unit configured to emit pulse laser to a target object to be ranged; a first receiving unit configured to receive the pulse laser reflected from the target object and generate a corresponding first signal; a second receiving unit configured to receive the pulse laser reflected from the target object and generate a corresponding second signal; and a calculating unit configured to receive the first signal and the second signal and perform distance calculation and determination according to a triangulation and a time-of-flight principle, respectively; wherein the first signal is used for calculating and determining a first distance according to the triangle ranging principle; the second signal is used for calculating and determining a second distance according to the time-of-flight principle. The ranging apparatus further includes following feature (a) or feature (b): (a) the ranging apparatus further comprises a circuit board, wherein the first receiving unit, the second receiving unit, and the laser emitting unit are all arranged on the circuit board at different positions; (b) at least two of the laser emitting unit, the first receiving unit, and the second receiving unit are arranged on different circuit boards and a reflecting mirror configured to reflect the pulse laser reflected from the target object to at least one of the first receiving unit and the second receiving unit; wherein one of the first receiving unit and the second receiving unit is arranged left or right with the laser emitting unit; the other one of the first receiving unit and the second receiving unit is arranged behind the laser emitting unit, and the reflecting mirror is configured to reflect the pulse laser reflected from the target object to the other one of the first receiving unit and the second receiving unit; the other one of the first receiving unit and the second receiving unit is placed vertically or obliquely; and the one of the first receiving unit and the second receiving unit, and the laser emitting unit are arranged on the same circuit board or different circuit boards.

Preferably, the first receiving unit (20) and the second receiving unit (30) are arranged on two sides of the laser emitting unit (10); or the first receiving unit (20) and the second receiving unit (30) are arranged on the same side of the laser emitting unit (10).

Preferably, the calculating unit (40) is configured to: analyze the first signal according to the triangle ranging principle to get to know the first distance between the target object and the ranging apparatus, and analyze the second signal according to the time-of-flight principle to get to know the second distance between the target object and the ranging apparatus; and determine a distance between the target object and the ranging apparatus in a weighted manner according to the first distance and the second distance.

Preferably, an optical axis (X3) of the laser emitting unit (10) and an optical axis (X5) of the second receiving unit (30) are both perpendicular to the circuit board (50); wherein the ranging apparatus further comprises a first lens (21) allowing the reflected pulse laser to pass through and be projected to the first receiving unit (20).

Preferably, an optical axis (X2) of the first receiving unit (20) is perpendicular to the circuit board (50), an optical axis (X1) of the first lens (21) and the optical axis (X2) of the first receiving unit (20) are parallel and offset, and the optical axis (X2) of the first receiving unit (20) is further away from the optical axis (X3) of the laser emitting unit (10) than the optical axis (X1) of the first lens (21); or the optical axis (X2) of the first receiving unit (20) is perpendicular to the circuit board (50), and the optical axis (X1) of the first lens (21) intersects with both the optical axis (X2) of the first receiving unit (20) and the optical axis (X3) of the laser emitting unit (10), and the optical axis (X1) of the first lens (21) passes through a receiving surface of the first receiving unit (20); or the optical axis (X1) of the first lens (21) intersects with the optical axis (X3) of the laser emitting unit (10), and the optical axis (X1) of the first lens (21) passes through and is perpendicular to a receiving surface of the first receiving unit (20).

Preferably, the ranging apparatus further comprises a second lens (31) allowing the reflected pulse laser to pass through and be projected to the second receiving unit (30); the ranging apparatus further comprises a third lens (11) for emitted pulse laser to pass; and the third lens (11) is mounted on a third frame (12), which is fixed to the circuit board (50).

Preferably, the ranging apparatus further comprises a first lens (21) allowing the reflected pulse laser to pass through and be projected to the first receiving unit (20), the first lens (21) is mounted on a first frame (22), and the first frame (22) is mounted on the third frame (12); and/or the ranging apparatus further comprises a second lens (31) allowing the reflected pulse laser to pass through and be projected to the second receiving unit (30), the second lens (31) is mounted on a second frame (32), and the second frame (32) is mounted on the third frame (12).

Preferably, the first receiving unit (20) comprises a CMOS or CCD optical sensor; and/or the second receiving unit (30) comprises a single photon avalanche diode or an avalanche photo diode, or a fast photo diode.

Preferably, the laser emitting unit (10), the first receiving unit (20), and the second receiving unit (30) are respectively arranged on a first circuit board (51), a second circuit board (52), and a third circuit board (53).

Preferably, the ranging apparatus further comprises a mounting structure (70) that holds the first circuit board (51), the second circuit board (52), and the third circuit board (53) relatively fixed; or the laser emitting unit (10) and the first receiving unit (20) are arranged on a fourth circuit board (54), and the second receiving unit (30) is arranged on a third circuit board (53); and the ranging apparatus further comprises a mounting structure (70) that holds the fourth circuit board (54) and the third circuit board (53) relatively fixed; or the laser emitting unit (10) and the second receiving unit (30) are arranged on a fifth circuit board (55), and the first receiving unit (20) is arranged on the second circuit board (52); and the ranging apparatus further comprises a mounting structure (70) that holds the fifth circuit board (55) and the second circuit board (52) relatively fixed.

Preferably, one of the first receiving unit (20) and the second receiving unit (30) is arranged up or down with the laser emitting unit (10), and the other of the first receiving unit (20) and the second receiving unit (30) is arranged left or right with the laser emitting unit (10); the different circuit boards are arranged to be parallel to each other; or, at least two of the different circuit boards are arranged to be non-parallel.

An embodiment of the present disclosure provides a lidar including: any one of the above ranging apparatuses; and a rotating pan-tilt. The rotating pan-tilt includes a base, a rotating plate, a transmission mechanism, and a driving apparatus, wherein the rotating plate is rotatably mounted on the base, the driving apparatus is mounted on the base, the transmission mechanism connects the rotating plate with the driving apparatus, and the ranging apparatus is arranged on the rotating plate.

An embodiment of the present disclosure provides a mobile robot including any one of the above lidars.

### BRIEF DESCRIPTION OF THE DRAWINGS

One or more implementations are exemplified by the corresponding accompanying drawings. These exemplified descriptions do not constitute a limitation on the embodiments. The elements with the same reference numerals in the drawings are denoted as similar elements, and unless otherwise specified, the drawings in the accompanying drawings do not constitute a scale limitation.
FIG. 1 is a schematic perspective view of a ranging apparatus of the related art.
FIG. 2 is a schematic perspective view of a ranging apparatus provided by a first embodiment of the present disclosure.
FIG. 3 is a schematic sectional view of a ranging apparatus provided by a first embodiment of the present disclosure.
FIG. 4 is a schematic view of an optical path of the ranging apparatus shown in FIG. 3.
FIG. 5 is a schematic plan view of a ranging apparatus provided by a second embodiment of the present disclosure.
FIG. 6 is a schematic plan view of a ranging apparatus provided by a third embodiment of the present disclosure.
FIG. 7 is a schematic plan view of a ranging apparatus provided by a fourth embodiment of the present disclosure.
FIG. 8 is a schematic plan view of a ranging apparatus provided by a fifth embodiment of the present disclosure.
FIG. 9 is another schematic plan view of the ranging apparatus provided by the fifth embodiment of the present disclosure.
FIG. 10 is a schematic plan view of a ranging apparatus provided by a sixth embodiment of the present disclosure.
FIG. 11 is a schematic sectional view of a ranging apparatus provided by a seventh embodiment of the present disclosure.
FIG. 12 is a schematic sectional view of a ranging apparatus provided by an eighth embodiment of the present disclosure.
FIG. 13 is a schematic sectional view of a ranging apparatus provided by a ninth embodiment of the present disclosure.
FIG. 14 is a schematic perspective view of a lidar provided by an embodiment of the present disclosure.
FIG. 15 is an exploded perspective view of the lidar of FIG. 14.

### DETAILED DESCRIPTION

For the purpose of facilitating the understanding of the present disclosure, a more detailed description of the present disclosure will be rendered by reference to the accompanying drawings and specific embodiments. It should be noted that when an element is referred to as being "fixed to" another element, it can be directly on the other element or one or more intermediate elements may be present therebetween. When an element is referred to as being "connected" to another element, it can be directly connected to the other element or one or more intermediate elements may be present therebetween. The terms "vertical", "horizontal", "left", "right", "upper", "lower", "inner", "outer", "bottom", etc. as used in the description indicate the orientation or positional relationship based on the orientation or positional relationship shown in the drawings, and are only for the convenience of describing the present disclosure and simplifying the description, rather than indicating or implying that the apparatus or element must have a specific orientation or be constructed and operated in a specific orientation, and therefore cannot be understood as a limitation of the present disclosure. Further, the terms "first" and "second", etc. are for descriptive purposes only and are not to be construed as indicating or implying relative importance.

Unless defined otherwise, all technical and scientific terms used herein have the same meaning as commonly understood by one of ordinary skills in the art to which this invention belongs. The terms used in the description of the present disclosure is for the purpose of describing specific embodiments only and is not intended to be limiting of the present disclosure. As used herein, the term "and/or" includes any and all combinations of one or more of the related listed items.

Further, the technical features involved in different embodiments of the present disclosure described below may be combined with each other as long as they do not conflict with each other.

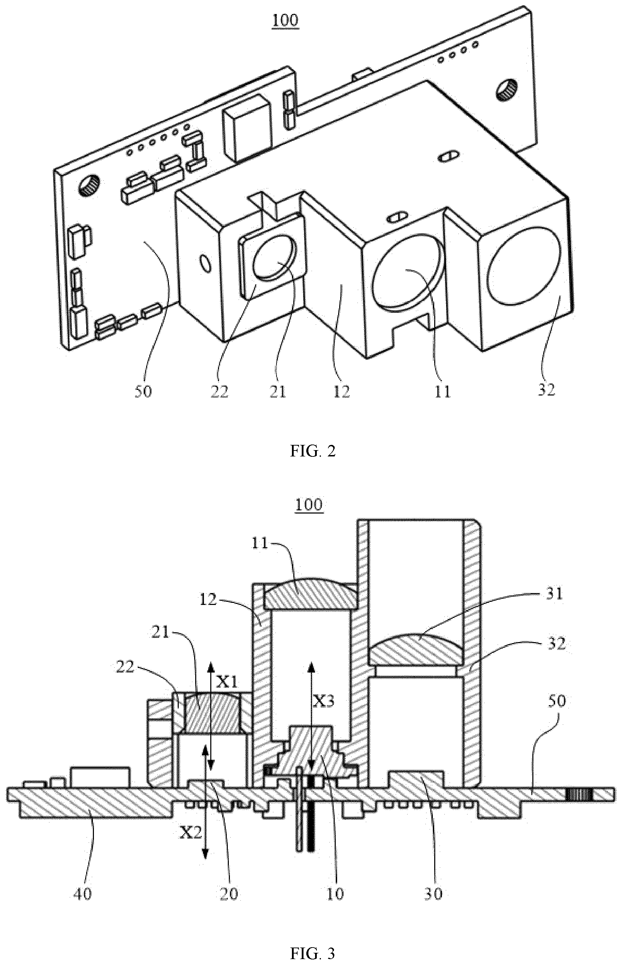

Referring to FIGs. 2 and 3, a schematic perspective view and a schematic sectional view of a ranging apparatus 100 provided by a first embodiment of the present disclosure are respectively shown. The ranging apparatus 100 may mainly include a laser emitting unit 10, a first receiving unit 20, a second receiving unit 30, a calculating unit 40, and a circuit board 50. The laser emitting unit 10, the first receiving unit 20, the second receiving unit 30, and the calculating unit 40 are all connected to the circuit board 50 for realizing signal transmission, control, and the like.

The laser emitting unit 10 is configured to emit pulse laser to a target object to be ranged. The laser emitting unit 10 may be constructed as a laser diode, which may emit laser pulse for distance measurement. The pulse laser emitted by the laser emitting unit 10 may be a highfrequency pulse laser, for example, a pulse laser of 1kHz or more. The laser emitting unit 10 such as a laser diode may be mounted on the circuit board 50 by soldering, or integrally arranged on the circuit board 50. The optical axis X3 of the laser emitting unit 10 may be arranged perpendicular to the circuit board 50. A control device for controlling the laser pulse emitted by the laser emitting unit 10 may be mounted on the circuit board 50, and such a control device may be integrated into the calculating unit 40 so that the calculating unit 40 becomes a master control apparatus. It will be appreciated that in other preferred embodiments, other apparatuses capable of emitting laser may be used as the laser emitting unit 10.

The first receiving unit 20 is configured to receive the pulse laser reflected from the target object and generate a corresponding first signal; the first signal is for calculating and determining distance according to the principle of trigonometrical ranging, that is, the first signal is for being transmitted to the calculating unit 40 for the calculating unit 40 to perform distance calculation and determination based on the first signal and according to the principle of trigonometrical ranging. The first receiving unit 20 may be mounted on the circuit board 50 by welding, or integrally arranged on the circuit board 50. The optical axis X2 of the first receiving unit 20 may be arranged perpendicular to the circuit board 50, and the first receiving unit 20 may generate a corresponding photoelectric signal and transmit it to the calculating unit 40 through a route on the circuit board 50 when sensing a laser pulse reflected back by the target object. The calculating unit 40 can analyze and calculate the photoelectric signal according to the principle of trigonometrical ranging to get to know the distance between the target object and the ranging apparatus 100.

Herein, the principle of trigonometrical ranging is that the laser emitting unit 10 emits laser, and after a target object is irradiated, the reflected light is received by the first receiving unit 20 such as a linear CCD (Charge Coupled Device), and since the laser emitting unit 10 and the first receiving unit 20 are spaced apart by a distance, target objects at different distances will be imaged at different positions on the first receiving unit 20 such as the linear CCD according to optical paths; further, the distance between the measured target object and the ranging apparatus 100 can be derived by calculating according to the trigonometric formula.

The second receiving unit 30 is configured to receive the pulse laser reflected from the target object and generate a corresponding second signal; the second signal is for calculating and determining distance according to the time-of-flight principle, that is, the second signal is for being transmitted to the calculating unit 40 for calculating and determining distance by the calculating unit 40 based on the second signal and according to the time-of-flight principle. Wherein the second receiving unit 30 may be different from the first receiving unit 20; for example, the second receiving unit 30 includes a Single Photon Avalanche Diode (SPAD); SPAD is a uniquely designed image sensor in which each pixel has an electronic element; when one single photon, called a photon, arrives at one pixel, it is "multiple superposed" to produce one single large electric pulse; the function of generating multiple electrons in a single photon provides many advantages, such as high precision distance measurement and higher sensitivity during image shoot, and so on. The second receiving unit 30 may be mounted on the circuit board 50 by welding, or integrally arranged on the circuit board 50. The optical axis X5 of the second receiving unit 30 may be arranged perpendicular to the circuit board 50. The second receiving unit 30, when sensing the laser pulse reflected back by the target object, may generate a corresponding photoelectric signal and transmit it to the calculating unit 40 through a route on the circuit board 50. The calculating unit 40 can analyze and calculate the photoelectric signal according to the time-of-flight principle (TOF) to get to know the distance between the target object and the ranging apparatus 100.

It is pointed out herein that, the time-of-flight principle is that the laser emitting unit 10 emits one laser pulse and the emission time is recorded by a timer, and after the target object is irradiated, the reflected light is received by the second receiving unit 30 and the receiving time is recorded by the timer; the subtraction of the two times results in the "time of flight" of the light, and as the speed of light is certain, the distance between the target object and the ranging apparatus 100 can be easily calculated after the speed and time are known.

As described above, the calculating unit 40 is configured to receive the first signal and the second signal and perform distance calculation and determination according to the triangle ranging principle and the time-of-flight principle, respectively.

For example, the calculating unit 40 may be arranged to perform the following operation.

The calculating unit 40 can analyze the first signal according to the triangle ranging principle to get to know a first distance between the target object and the ranging apparatus 100, and analyze the second signal according to the time-of-flight principle to get to know a second distance between the target object and the ranging apparatus 100; besides, the calculating unit 40 can determine the distance between the target object and the ranging apparatus 100 in a weighted manner according to the first distance and the second distance.

In one example, the calculating unit 40 may determine the distance between the target object and the ranging apparatus 100 primarily adopting the second distance when the first distance and the second distance are both above a first set distance. For example, the first set distance may be set to 10 meters. When the first distance is 11 meters and the second distance is 12 meters, the calculating unit 40 determines the distance between the target object and the ranging apparatus 100 as 12 meters. This is because, when the distance between the target object and the ranging apparatus 100 is relatively long, the distance calculated according to the time-of-flight principle is relatively accurate. Of course, in the calculation in a weighted manner, the first distance can also be considered; besides, the weights of the first distance and the second distance in the weighted calculation can be determined according to experiments.

In one example, the calculating unit 40 can determine the distance between the target object and the ranging apparatus 100 by primarily adopting the first distance when the first distance and the second distance are both below a second set distance, wherein the second set distance is smaller than the first set distance. For example, the first set distance can be 5 meters. When the first distance is 4 meters and the second distance is 3 meters, the calculating unit 40 determines the distance between the target object and the ranging apparatus 100 as 4 meters. This is because, when the distance between the target object and the ranging apparatus 100 is relatively short, the distance calculated according to the triangle ranging principle is relatively accurate. Of course, in the calculation in a weighted manner, the second distance can also be considered; besides, the weights of the first distance and the second distance in the weighted calculation can be determined according to experiments.

In one example, when the first distance and the second distance are both greater than the second set distance and smaller than the first set distance, the calculating unit 40 can perform a weighted average on the distance between the target object and the ranging apparatus 100 by adopting the first distance and second distance to determine the final result. For example, when the first distance is 8 meters and the second distance is 9 meters, the calculating unit 40 determines the distance between the target object and the ranging apparatus 100 as an average of 9 plus 8, i.e., 8.5 meters. This is because, when the distance between the target object and the ranging apparatus 100 is at the centered distance, the weighted average is performed on the two distances calculated according to the triangle ranging principle and the time-of-flight principle so that a more accurate distance can be obtained. In the calculation in a weighted manner, the weights of the first distance and the second distance in the weighted calculation can be determined according to experiments.

In some embodiments, as shown in FIG. 3, the ranging apparatus 100 can further include a first lens 21 for the pulse laser reflected by the target object to pass through and be projected to the first receiving unit 20. The first lens 21 may be mounted on a first frame 22, which may be fixed to the circuit board 50 such that the first lens 21 is located substantially above the first receiving unit 20. The laser pulse reflected back by the target object can be focused and collimated by the first lens 21 before being sensed by the first receiving unit 20. In addition, the first lens 21 may be an aspheric lens, such as an aspheric glass lens; therefore, by adopting an aspheric lens, namely adopting the design of a single lens for the lens corresponding to the first receiving unit 20, the camera lens structure of the ranging apparatus can be effectively simplified, and the assembly is convenient such that the cost of the assembly corresponding to the first receiving unit 20 and the whole ranging apparatus can be effectively reduced.

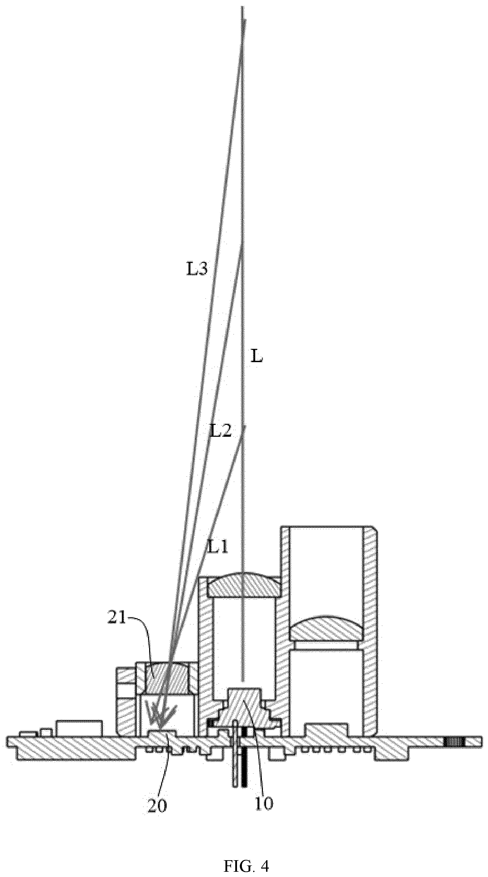

In some embodiments, as shown in FIG. 3, the optical axis X1 of the first lens 21 and the optical axis X2 of the first receiving unit 20 may be arranged in parallel and offset, that is, the first receiving unit 20 is biased with respect to the first lens 21. Besides, the optical axis X2 of the first receiving unit 20 is farther from the optical axis X3 of the laser emitting unit 10 than the optical axis X1 of the first lens 21. For example, the optical axis X1 of the first lens 21 may be a central axis thereof, the optical axis X2 of the first receiving unit 20 may be an axis passing through the central point of the first receiving unit 20 and perpendicular thereto, and the optical axis X3 of the laser emitting unit 10 may be the central axis thereof. For example, in the embodiment shown in FIG. 3, the optical axis X2 of the first receiving unit 20 and the optical axis X1 of the first lens 21 are both on the left side of the optical axis X3 of the laser emitting unit 10, and the optical axis X2 of the first receiving unit 20 shifts to the left more than the optical axis X1 of the first lens 21. In addition, the first receiving unit 20 and the first lens 21 may also be located on the right side of the laser emitting unit 10; at this time, the optical axis X2 of the first receiving unit 20 and the optical axis X1 of the first lens 21 are both on the right side of the optical axis X3 of the laser emitting unit 10, and the optical axis X2 of the first receiving unit 20 shifts to the right more than the optical axis X1 of the first lens 21. In conjunction with what is shown FIG. 4, in a short-distance measurement range, since the laser L emitted by the laser emitting unit 10 is irradiated to the target object, the various reflected lights L1, L2, L3, etc. are mostly projected in the direction of the first receiving unit 20 away from the laser emitting unit 10 after passing through the first lens 21. Therefore, biasing the first receiving unit 20 away from the side of the laser emitting unit 10 maximizes the use of the sensor target surface of the first receiving unit 20.

In some embodiments, as shown in FIG. 3, the ranging apparatus 100 can further include a second lens 31 for the pulse laser reflected by the target object to pass through and be projected to the second receiving unit 30. The second lens 31 may be mounted on a second frame 32, which may be fixed to the circuit board 50 such that the second lens 31 is located above the second receiving unit 30. The optical axis X6 of the second lens 31 can be arranged to be perpendicular to the circuit board 50 and coinciding with the optical axis X5 of the second receiving unit 30; alternatively, the second lens 31 may be arranged as an adjustable portion, and the optical axis X6 of the second lens 31 may also not completely coincide with the optical axis X5 of the second receiving unit 30 when the second lens 31 is adjusted to a preferred effect. The laser pulse reflected back by the target object can be focused and collimated by the second lens 31 before being sensed by the second receiving unit 30. For example, the optical axis X6 of the second lens 31 may be a central axis thereof, and the optical axis X5 of the second receiving unit 30 may be an axis passing through the central point of the second receiving unit 30 and perpendicular thereto.

In some embodiments, as shown in FIG. 3, the ranging apparatus 100 may further include a third lens 11 for the emitted pulse laser to pass through and be projected to the target object. The third lens 11 may be mounted on a third frame 12, which may be fixed to the circuit board 50 such that the third lens 11 is located above the laser emitting unit 10. The optical axis X4 of the third lens 11 can be arranged to be perpendicular to the circuit board 50 and coinciding with the optical axis X3 of the laser emitting unit 10; alternatively, the optical axis X4 of the third lens 11 may not coincide with the optical axis X3 of the laser emitting unit 10 because the optical axis X4 of the third lens 11 may be arranged slightly higher than the optical axis X3 of the laser emitting unit 10 in order to make the laser pitch angle slightly upward. The laser pulse emitted by the laser emitting unit 10 may be transmitted outward through the third lens 11, which is capable of focusing and collimating the laser pulse passing therethrough. For example, the optical axis X4 of the third lens 11 may be the central axis thereof.

The first lens 21, the second lens 31 and the third lens 11 may be lenticular, and may also be combined with more lenses. For example, the third lens 11 can also be combined with one or more lenses into a lens group to focus and collimate laser pulse emitted by the laser emitting unit 10 and then transmit it outwards; the second lens 31 may also be combined with one or more lenses into a lens group to focus and collimate the laser pulse reflected back by the target object before the laser pulse is sensed by the second receiving unit 30. In addition, in an embodiment that the optical axis X1 of the first lens 21 and the optical axis X2 of the first receiving unit 20 are arranged as offset, a unique first lens 21 can be arranged above the first receiving unit 20; the focal length of the first lens 21 may be less than or equal to 16mm, and may be, for example, 16mm, 14mm, 12mm, 10mm, 9mm, 8mm, 7.5mm, 7mm, 6mm, or 5mm, etc.

Further, the first frame 22, the second frame 32, and the third frame 12 may be components independent from each other. Alternatively, as shown in FIGs. 2 and 3, the second frame 32 and the third frame 12 may be an integrally formed member and form a space for housing the first frame 22; accordingly, the first frame 22 may be mounted on such an integrally formed member, which is then mounted on the circuit board 50.

In some embodiments, as shown in FIG. 3, the first receiving unit 20 may include a CMOS (Complementary Metal Oxide Semiconductor) optical sensor or a CCD optical sensor; further, the second receiving unit may include an Avalanche Photo Diode (APD) or a Fast Photo Diode. In the ranging apparatus 100 of the present application, a reflected light signal is focused through the first lens 21 and then projected onto, such as the surface where the first receiving unit 20 of a CMOS or CCD optical sensor is located, at the focal distance behind the first lens 21, the surface of the first receiving unit 20 being generally perpendicular to the optical axis of the first lens 21; the reflected light signal generates one projection point on the surface of the first receiving unit 20; the position coordinate of the projection point on the imaging surface of the first receiving unit 20 can be obtained by photoelectric signal conversion by the first receiving unit 20. The CMOS or CCD optical sensor can convert a light image on a photo surface into an electric signal in a corresponding proportional relationship with the light image through the photoelectric conversion function of the photoelectric device. The first receiving unit 20 may be arranged on the circuit board 50 by a conductive connection mode such as welding, soldering, or the like. The first receiving unit 20 may also be connected to the circuit board 50 in any type of conductive connection, such as a conductive adhesive, a conductive rubber, a spring contact, a flexible printed circuit board, a bond wire or a plug-in connection (THT), etc., or a combination thereof.

In some embodiments, as shown in FIGs. 2 and 3, the first receiving unit 20 and the second receiving unit 30 may be arranged on both sides of the laser emitting unit 10; accordingly, the first frame 22 and the second frame 32 are also arranged at both sides of the third frame 12. As many radar products applied by the ranging apparatus have waterproof and dustproof requirements, a light-transmitting sealing cover needs to be arranged outside the radar. However, the sealing cover can generate a refraction effect on the optical path, so that light spot sending and receiving signals can be deformed in addition to attenuation, generally resulting in the same effect as that of a cylindrical mirror effect, thereby the light spot stretching horizontally and narrowing vertically. Accordingly, in the embodiment, by arranging the laser emitting unit 10 in the middle, the laser emitting unit 10 emits the laser from the middle so that the light spot stretching is in a symmetrical manner without causing the centroid bias of the light spot. In contrast, when the laser emitting unit 10 is arranged at an edge position, laser emission from the edge results in an asymmetric pattern of light spot stretching, causing the centroid of the light spot to be biased.

In other embodiments, the arranged positions of the first receiving unit 20 and the second receiving unit 30 and the laser emitting unit 10 may be changed; for example, the first receiving unit 20 and the second receiving unit 30 may be arranged on the same side of the laser emitting unit 10.

In some embodiments, as shown in FIGs. 2 and 3, the circuit board 50 may be a printed circuit board, which may include a substrate that may be prepared from the following materials: Cu alloy such as brass and bronze; stainless steel, specifically low-alloy stainless steel; magnesium alloy; aluminum; aluminum alloy, specifically wrought aluminum alloy, such as, EN AW-6061, and the like. In addition, the substrate of the circuit board 50 may be prepared from glass, glass-ceramic or ceramic and like materials. When the substrate of the circuit board 50 is made of a metal material, heat can be well dissipated to counteract thermal tension.

The same circuit board 50 is used in the above-described embodiments, which makes the structure compact and facilitates mounting and distance setting between components. In some other embodiments, at least two of the laser emitting unit 10, the first receiving unit 20, and the second receiving unit 30 may also be arranged on different circuit boards to adapt to different structural arrangement requirements.

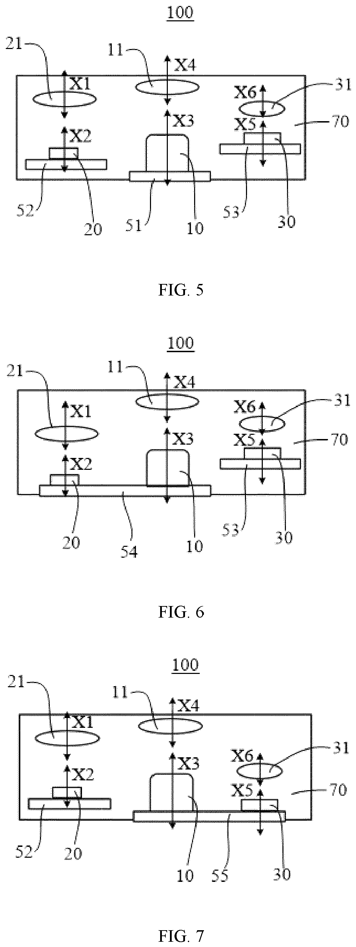

For example, referring to FIG. 5, a schematic plan view of a ranging apparatus 100 provided by a second embodiment of the present disclosure is provided. The ranging apparatus 100 provided by the second embodiment is substantially the same as the ranging apparatus 100 provided by the first embodiment, and the difference is as follows: in the second embodiment, the laser emitting unit 10, the first receiving unit 20, and the second receiving unit 30 are arranged on a first circuit board 51, a second circuit board 52, and a third circuit board 53, respectively. The first circuit board 51, the second circuit board 52, and the third circuit board 53 may be respectively independent circuit boards, and may be connected by wires for signal transmission. By arranging different first circuit board 51, second circuit board 52, and third circuit board 53, the positions of the laser emitting unit 10, the first receiving unit 20 and the second receiving unit 30 can be independently arranged; for example, the second circuit board 52 and/or the third circuit board 53 may be arranged higher than the first circuit board 51 so as to raise the position of the first receiving unit 20 and/or the second receiving unit 30 which are on the second circuit board 52 and/or the third circuit board 53 in the ranging apparatus 100; alternatively, the first circuit board 51, the second circuit board 52 and the third circuit board 53 may be located at the same horizontal height.

In the second embodiment, the ranging apparatus 100 may further include a first lens 21, a second lens 31, and a third lens 11 similar to those of the first embodiment. The relationship between optical axis X1, optical axis X6, and optical axis X4 of the first lens 21, the second lens 31, and the third lens 11, and optical axis X2, optical axis X5, and optical axis X3 of the first receiving unit 20, the second receiving unit 30 and the laser emitting unit 10 may have the same arrangement mode as that of the first embodiment. In addition, as shown in FIG. 5, the optical axis X1 of the first lens 21 may also coincide with the optical axis X2 of the first receiving unit 20.

Further, the ranging apparatus 100 may include a mounting structure 70 for holding the first circuit board 51, the second circuit board 52, and the third circuit board 53 relatively fixed. The mounting structure 70 may be an integrally formed structure or a structure in which multiple members are assembled, so long as the first circuit board 51, the second circuit board 52, and the third circuit board 53 can be held relatively fixed. In addition, the mounting structure 70 also serves to mount the first lens 21, the second lens 31, and the third lens 11.

Referring to FIG. 6, a schematic plan view of a ranging apparatus 100 provided by a third embodiment of the present disclosure is provided. The ranging apparatus 100 provided by the third embodiment is substantially the same as the ranging apparatus 100 provided by the first embodiment or the second embodiment, and the difference is as follows: in the third embodiment, the laser emitting unit 10 and the first receiving unit 20 are arranged on a fourth circuit board 54, and the second receiving unit 30 is arranged on the third circuit board 53. That is, the fourth circuit board 54 is equivalent to replacing the first circuit board 51 and the second circuit board 52 in the second embodiment with one circuit board. The fourth circuit board 54 and the third circuit board 53 may be respectively independent circuit boards, and may be connected by wires for signal transmission. By arranging different fourth circuit board 54 and third circuit board 53, the position of the second receiving unit 30 can be independently arranged; for example, the third circuit board 53 may be arranged to be higher than the fourth circuit board 54 so as to raise the position of the second receiving unit 30 which is on the third circuit board 53 in the ranging apparatus 100; alternatively, the fourth circuit board 54 and the third circuit board 53 may be located at the same horizontal height.

Further, the ranging apparatus 100 may include a mounting structure 70 that holds the fourth circuit board 54 and the third circuit board 53 relatively fixed. The mounting structure 70 in the third embodiment may be similar to that in the second embodiment and will not be described in detail herein.

Referring to FIG. 7, a schematic plan view of a ranging apparatus 100 provided by a fourth embodiment of the present disclosure is provided. The ranging apparatus 100 provided in the fourth embodiment is substantially the same as the ranging apparatus 100 provided in the first embodiment, second embodiment or third embodiment, and the difference is as follows: in the fourth embodiment, the laser emitting unit 10 and the second receiving unit 30 are arranged on a fifth circuit board 55, and the first receiving unit 20 is arranged on the second circuit board 52. That is, the fifth circuit board 55 is equivalent to replacing the third circuit board 53 and the first circuit board 51 in the second embodiment with one circuit board. The fifth circuit board 55 and the second circuit board 52 may be respectively independent circuit boards, and may be connected by wires for signal transmission. By arranging different fifth circuit board 55 and second circuit board 52, the position of the first receiving unit 20 can be independently arranged; for example, the second circuit board 52 may be arranged to be higher than the fifth circuit board 55 to raise the position of the first receiving unit 20 which is on the second circuit board 52 in the ranging apparatus 100; alternatively, the fifth circuit board 55 and the second circuit board 52 may be located at the same horizontal height.

Further, the ranging apparatus 100 may include a mounting structure 70 that holds the fifth circuit board 55 and the second circuit board 52 relatively fixed. The mounting structure 70 in the fourth embodiment may be similar to the mounting structure 70 in the second embodiment or the third embodiment, and will not be described in detail herein.

Further, in the ranging apparatus 100 of the second embodiment to the fourth embodiment described above, the different circuit boards may be arranged to be parallel to each other. For example, the first circuit board 51, the second circuit board 52, and the third circuit board 53 may be mounted and arranged to be parallel to each other through the mounting structure 70.

Alternatively, in the ranging apparatus 100 of the second embodiment to the fourth embodiment described above, at least two of the different circuit boards are arranged to be non-parallel. For example, the second circuit board 52 or the third circuit board 53 may be mounted and arranged, through the mounting structure 70, to be non-parallel to the first circuit board 51. In one embodiment, the first lens 21, the first receiving unit 20, and the second circuit board 52 are each arranged to be oblique with respect to the first circuit board 51 such that the optical axis X1 of the first lens 21 intersects with the optical axis X3 of the laser emitting unit 10, the optical axis X1 of the first lens 21 passing through and being perpendicular to the receiving surface of the first receiving unit 20, and the optical axis X1 of the first lens 21 passing through and being perpendicular to the second circuit board 52. For example, the optical axis X1 of the first lens 21 may coincide with the optical axis X2 of the first receiving unit 20; the angle at which the optical axis X1 of the first lens 21 intersects with the optical axis X3 of the laser emitting unit 10 may be, for example, in the range of 3 degrees to 30 degrees, for example, 3 degrees, 5 degrees, 8 degrees, 10 degrees, 15 degrees, 20 degrees, 25 degrees, 30 degrees, etc. The arrangement mode also maximizes the use of the sensor target surface of the first receiving unit 20.

Further, in the ranging apparatus 100 of the second embodiment to the fourth embodiment described above, it may also include the above-described calculating unit 40 configured to receive the first signal and the second signal and perform distance calculation and determination according to the triangle ranging principle and the time-of-flight principle, respectively. The calculating unit 40 may be similar to the calculating unit in the first embodiment, and the difference is as follows: the calculating unit 40 may be connected to all circuit boards in one of the second embodiment to the fourth embodiment in order to realize the transmission, control, etc. of the signal. In addition, the calculating unit 40 may be mounted on the first circuit board 51, the second circuit board 52, the third circuit board 53, the fourth circuit board 54, or the fifth circuit board 55.

The laser emitting unit 10, the first receiving unit 20, and the second receiving unit 30 in the above-described embodiment may all be arranged in a straight line. In some other embodiments, one of the first receiving unit 20 and the second receiving unit 30 may be arranged up or down with the laser emitting unit 10, and the other of the first receiving unit 20 and the second receiving unit 30 may be arranged left or right with the laser emitting unit 10.

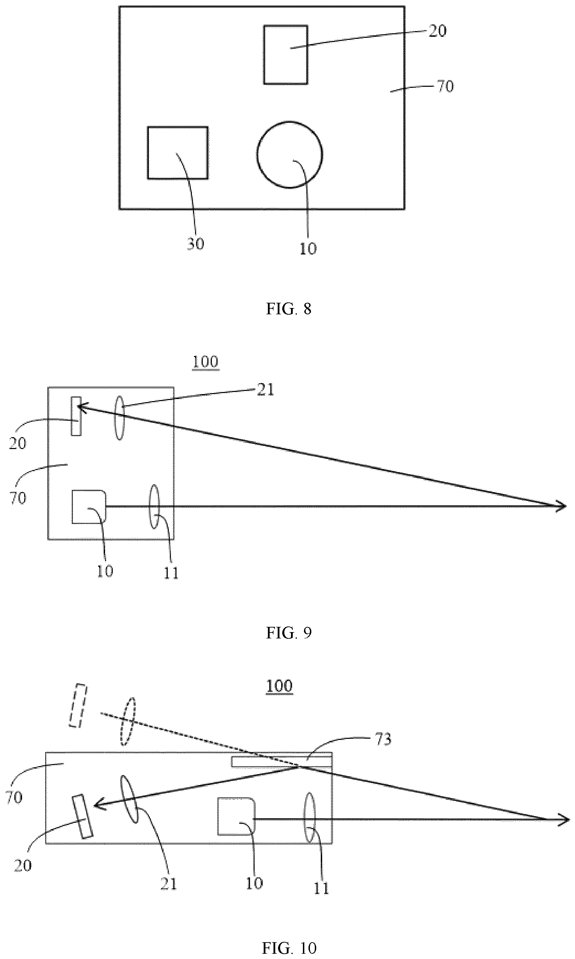

For example, referring to FIGs. 8 and 9, two schematic plan views of a ranging apparatus 100 provided by a fifth embodiment of the present disclosure are provided. The ranging apparatus 100 provided by the fifth embodiment is substantially the same as the ranging apparatus 100 provided from the first embodiment to the fourth embodiment; for example, the laser emitting unit 10, the first receiving unit 20 and the second receiving unit 30 in the fifth embodiment are all arranged on the same circuit board 50; alternatively, at least two of the laser emitting unit 10, the first receiving unit 20 and the second receiving unit 30 are arranged on different circuit boards; or when different circuit boards are adopted, the different circuit boards are arranged to be parallel to each other, or at least two of the different circuit boards are arranged to be non-parallel; alternatively, the ranging apparatus 100 further includes a calculating unit 40 configured to receive the first signal and the second signal and perform distance calculation and determination according to the triangle ranging principle and the time-of-flight principle, respectively. The fifth embodiment differs from the ranging apparatus 100 provided from the first embodiment to the fourth embodiment in that: in the fifth embodiment, the first receiving unit 20 may be arranged above the laser emitting unit 10, and the second receiving unit 30 may be arranged on the left side of the laser emitting unit 10.

In some other embodiments, the first receiving unit 20 may be arranged below the laser emitting unit 10 and the second receiving unit 30 may be arranged on the right side of the laser emitting unit 10. Alternatively, the second receiving unit 30 may be arranged above or below the laser emitting unit 10, and the first receiving unit 20 may be arranged on the left side or right side of the laser emitting unit 10.

It is pointed out herein that, arranging the first receiving unit 20, for example, a CMOS optical sensor or a CCD optical sensor, above and below the laser emitting unit 10 has the following advantageous effects. Firstly, since the ranging apparatus 100 is arranged in the light-transmitting cover, the light-transmitting cover causes the light spot on a barrier to be split after the light spot stretches in the horizontal direction, which affects the extraction precision and further increases calculation error; accordingly, placing the first receiving unit 20 and the laser emitting unit 10 in an up or down manner makes the laser centroid calculation to change from a horizontal direction to a vertical direction, and therefore, the calculation is not affected by the barrier splitting light spot. Secondly, the first receiving unit 20 and the laser transmitting unit 10 are placed in the up or down manner so that the multipath reflection problem can be avoided more effectively; this is because, since the straight line passing through the optical axis of the laser emitting unit 10 and the optical axis of the first receiving unit 20 is not parallel to the horizontal plane, first reflected light formed by the light emitted by the laser emitting unit 10 encountering the barrier surfaces at different distances will always remain at a fixed height of the image sensor of the first receiving unit 20; it will be difficult for most of the second reflected ray of light generated by the multipath to pass through the optical axis of the first receiving unit 20 for imaging; even if a small part is imaged on different line heights of the image sensor by passing through the first receiving unit 20, information of other multipath reflections can be effectively filtered by detecting information on a specific line.

Further, since the relevant structure for trigonometrical ranging requires a certain baseline height, the vertical placement of the first receiving unit 20, for example, a CMOS optical sensor or a CCD optical sensor, and the laser emitting unit 10 will result in a high structure height, which can have a structural appearance effect for some specific use scenarios (for example, when applied to the floor mopping robot). The embodiment of the present application may reduce the height by a reflective structural design, as specifically described below.

For example, referring to FIG. 10, a schematic plan view of a ranging apparatus 100 provided by a sixth embodiment of the present disclosure is provided. The ranging apparatus 100 provided in the sixth embodiment is substantially the same as the ranging apparatus 100 provided from the first embodiment to the fifth embodiment; for example, the ranging apparatus 100 further includes a calculating unit 40 configured to receive the first signal and the second signal and perform distance calculation and determination according to the triangle ranging principle and the time-of-flight principle, respectively. This sixth embodiment differs from the ranging apparatus 100 provided from the first embodiment to the fifth embodiment in that: in the sixth embodiment, the ranging apparatus 100 further includes a reflecting mirror 73 configured to reflect the pulse laser reflected from the target object to at least one of the first receiving unit 20 and the second receiving unit 30.

By arranging the reflecting mirror 73, it is possible to allow the mounting positions of the first receiving unit 20 and the second receiving unit 30 to be arranged more flexibly. For example, one of the first receiving unit 20 and the second receiving unit 30 is arranged left or right with the laser emitting unit 10; the other of the first receiving unit 20 and the second receiving unit 30 is arranged behind the laser emitting unit 10, and the reflecting mirror 73 is configured to reflect the pulse laser reflected from the target object to the other one of the first receiving unit 20 and the second receiving unit 30. In the embodiment shown in FIG. 10, the second receiving unit (see the second receiving unit 30 of FIG. 8) may be arranged left or right with the laser emitting unit 10; the first receiving unit 20 may be arranged behind the laser emitting unit 10, and the reflecting mirror 73 is configured to reflect the pulse laser reflected from the target object to the first receiving unit 20.

As shown in FIG. 10, the two components shown in dotted lines are the first receiving unit 20 and the first lens 21 required to be arranged when the reflecting mirror 73 is not adopted. This in fact amounts to the structures shown in FIGs. 8 and 9. However, in the sixth embodiment, by arranging the reflecting mirror 73, the vertical height of the laser emitting unit 10 and the first receiving unit 20, such as a CMOS optical sensor or a CCD optical sensor can be reduced; besides, the first receiving unit 20 may be arranged at other positions in the ranging apparatus 100.

Further, in the sixth embodiment, the other one of the first receiving unit 20 and the second receiving unit 30 may be placed vertically or obliquely. For example, when the reflecting mirror 73 reflects the pulse laser reflected from the target object to the first receiving unit 20, the first receiving unit 20 is arranged behind the laser emitting unit 10, and the first receiving unit 20 is placed vertically or obliquely.

Further, in the sixth embodiment, the first receiving unit 20 or the second receiving unit 30 is arranged left or right with the laser emitting unit 10, and the laser emitting unit 10 may be arranged on the same circuit board or different circuit boards. It will be readily understood that, with front and back arrangement, the first receiving unit 20 or the second receiving unit 30 arranged behind the laser emitting unit 10 and the laser emitting unit 10 need to be arranged on different circuit boards.

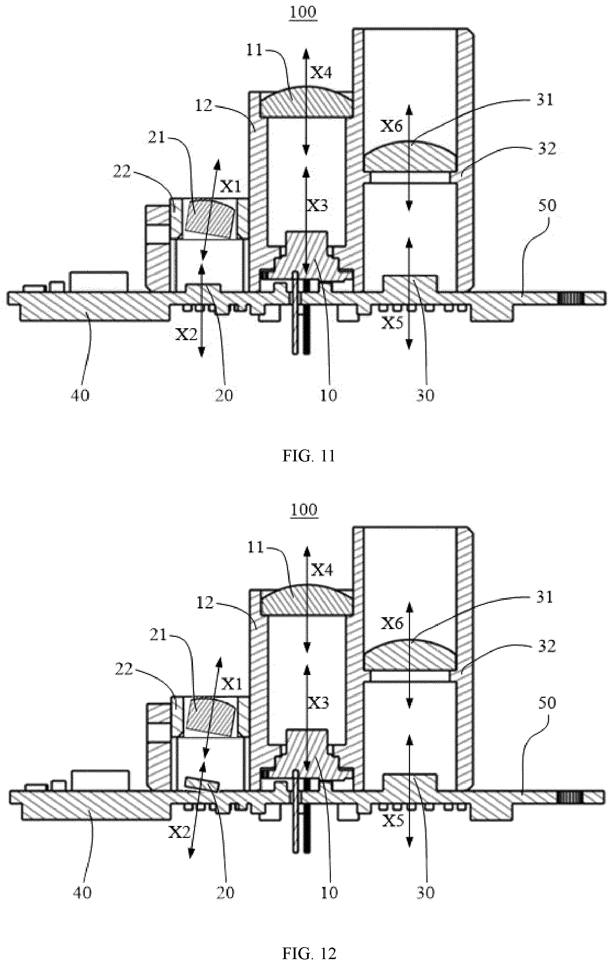

Referring to FIG. 11, a schematic sectional view of a ranging apparatus 100 provided by a seventh embodiment of the present disclosure is provided. The ranging apparatus 100 in the embodiment may be substantially the same as the ranging apparatus 100 shown from FIG. 2 to FIG. 4, with the difference that the direction of the optical axis X1 of the first lens 21 in FIG. 11 is changed. Specifically, the first lens 21 is arranged to be oblique with respect to the circuit board 50 such that the optical axis X1 of the first lens 21 intersects with both the optical axis X2 of the first receiving unit 20 and the optical axis X3 of the laser emitting unit 10, and the optical axis X1 of the first lens 21 passes through the receiving surface of the first receiving unit 20. For example, the optical axis X1 of the first lens 21 may intersect with the optical axis X2 of the first receiving unit 20 on the receiving surface of the first receiving unit 20; the angle at which the optical axis X1 of the first lens 21 intersects with the optical axis X2 of the first receiving unit 20 and the optical axis X3 of the laser emitting unit 10 may be, for example, in the range of 3 degrees to 30 degrees, for example, 3 degrees, 5 degrees, 8 degrees, 10 degrees, 15 degrees, 20 degrees, 25 degrees, 30 degrees, etc. The arrangement mode also maximizes the use of the sensor target surface of the first receiving unit 20. It is pointed out herein that the distinguishing feature of the seventh embodiment is equally applicable to the embodiments shown from FIG. 5 to FIG. 10.

Referring to FIG. 12, a schematic sectional view of a ranging apparatus 100 provided by an eighth embodiment of the present disclosure is provided. The ranging apparatus 100 in the embodiment may be substantially the same as the ranging apparatus 100 shown from FIG. 2 to FIG. 4, and the difference is that the direction of the optical axis X1 of the first lens 21 and the direction of the optical axis X2 of the first receiving unit 20 in FIG. 11 are both changed. Specifically, both the first lens 21 and the first receiving unit 20 are arranged to be oblique with respect to the circuit board 50 such that the optical axis X1 of the first lens 21 intersects with the optical axis X3 of the laser emitting unit 10, and the optical axis X1 of the first lens 21 passes through and is perpendicular to the receiving surface of the first receiving unit 20. For example, the optical axis X1 of the first lens 21 may coincide with the optical axis X2 of the first receiving unit 20; the angle at which the optical axis X1 of the first lens 21 intersects with the optical axis X3 of the laser emitting unit 10 may be, for example, in the range of 3 degrees to 30 degrees, for example, 3 degrees, 5 degrees, 8 degrees, 10 degrees, 15 degrees, 20 degrees, 25 degrees, 30 degrees, etc. The arrangement mode may also maximize the use of the sensor target surface of the first receiving unit 20. It is pointed out herein that the distinguishing feature of the eighth embodiment is equally applicable to the embodiments shown from FIG. 5 to FIG. 10.

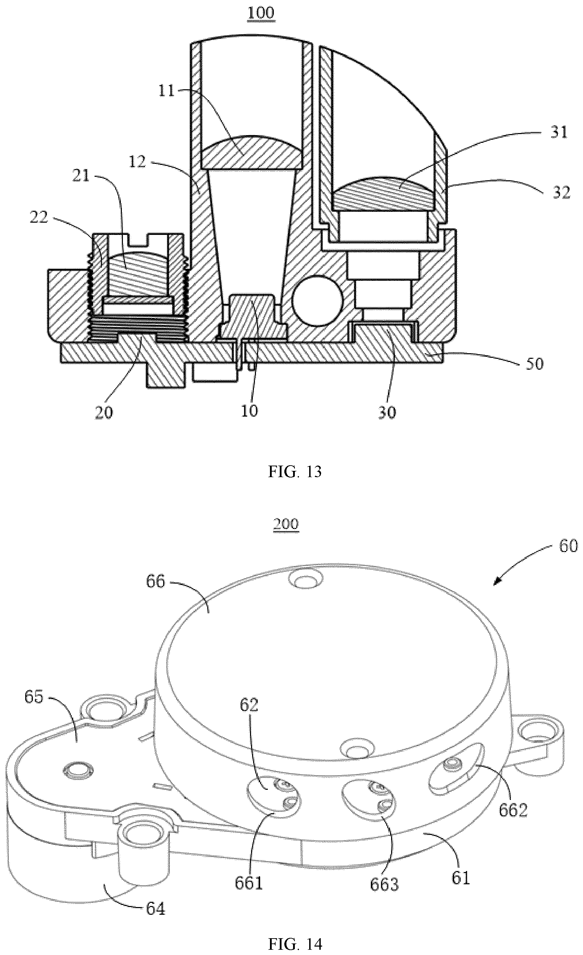

Referring to FIG. 13, a schematic sectional view of a ranging apparatus 100 provided by a ninth embodiment of the present disclosure is provided. The ranging apparatus 100 in the embodiment may be substantially the same as the ranging apparatus 100 shown from FIG. 2 to FIG. 4, and the difference is that the first frame 22, the second frame 32, and the third frame 12 in FIG. 13 are changed. Specifically, in the embodiment shown in FIG. 13, the third frame 12 may be mounted on the circuit board 50 as a main frame, and the first frame 22 and the second frame 32 are mounted on the third frame 12, respectively. For example, the first frame 22 may be provided with external thread to be rotatably mounted within a threaded hole of the third frame 12; the second frame 32 may have an insertion portion or engagement portion to be inserted into an insertion hole of the third frame 12 or be connected to a corresponding engagement portion of the third frame 12. According to the above mode, the first lens 21 and the second lens 31 can be conveniently adjusted; that is, by separating the first frame 22 and the second frame 32 which are mounted with the first lens 21 and the second lens 31, and the third frame 12, which is the main frame, it is possible to adjust the relative positions of the first lens 21 and the first receiving unit 20 and the relative positions of the second lens 31 and the second receiving unit 30 during mounting, and then fix them by a binder such as glue after the adjustment. It is pointed out herein that the distinguishing feature of the ninth embodiment is equally applicable to the embodiments shown from FIG. 5 to FIG. 10.

In the ranging apparatus 100 provided by the embodiment of the present disclosure, because the TOF ranging mode has the features of high long-distance precision and low short-distance precision, and the trigonometrical ranging mode has high short-distance precision and poor long-distance precision, by combining the advantages of TOF ranging and trigonometrical ranging, the ranging apparatus 100 of the application is applicable to the measurement of long-distance and short-distance with high measurement precision. In addition, the ranging apparatus 100 provided by the embodiment of the present disclosure can make the structure more compact while considering the measurement of long-distance and short-distance.

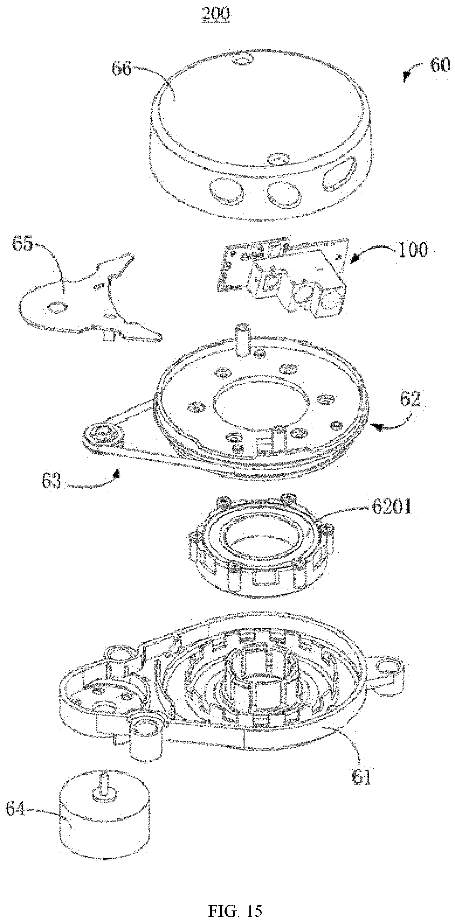

Referring to FIGs. 14 and 15, a schematic perspective view and an exploded perspective view, respectively, of a lidar 200 provided by an embodiment of the present disclosure are provided. As shown in FIGs. 14 and 15, the lidar 200 may mainly include any of the ranging apparatuses 100 described above, and a rotating pan-tilt 60.

The rotating pan-tilt 60 may include a base 61, a rotating plate 62, a transmission mechanism 63, and a driving apparatus 64. The rotating plate 62 is rotatably mounted to the base 61, the driving apparatus 64 is mounted to the base 61, the transmission mechanism 63 connects the rotating plate 62 and the driving apparatus 64, and the ranging apparatus 100 is provided on the rotating plate 62.

The laser emitting unit 10 of the ranging apparatus 100 is configured to emit an optical signal of the laser, the first receiving unit 20 and the second receiving unit 30 are configured to receive the optical signal reflected by the target to be measured and inputting the optical signal into the calculating unit 40 through the circuit board 50, the calculating unit 40 is for analyzing and processing the input optical signal, the transmission mechanism 63 is for transmitting power between the driving apparatus 64 and the rotating plate 62, and the driving apparatus 64 is for outputting power to rotate the rotating plate 62 about the rotation axis. Accordingly, the 360° scanning operation of the lidar 200 can be realized by arranging the rotating pan-tilt 60.

Further, the rotating pan-tilt 60 further includes a baffle 65. The base 61 is arranged with an accommodating groove, the rotating plate 62 is rotatably mounted on the base 61 and covers a part of the accommodating groove, the rotating plate 62 can rotate relative to the base 61 about the rotation axis, and the mounting portion of the rotating plate 62 can be rotatably mounted on the base 41 through a bearing 6201; the baffle 65 is mounted on the base 61 and covers the other part of the accommodating groove, that is, the rotating plate 62 and the baffle 65 cover the notch of the accommodating groove together to prevent external sundries from entering the accommodating groove from the notch of the accommodating groove. The driving apparatus 64 is mounted on one side of the base 61 facing away from the accommodating groove, the transmission mechanism 63 connects the rotating plate 62 with the driving apparatus 64, and the transmission mechanism 63 is accommodated in the accommodating groove. Through the arrangement, external sundries can be prevented from entering the accommodating groove to influence the work of the transmission mechanism 63 such that the phenomenon that the lidar 200 cannot normally work due to the external sundries is avoided.

In some embodiments, as shown in FIGs. 14 and 15, the rotating pan-tilt 60 further includes a shell 66 that shields and is fixedly connected to the rotary base 62, and the ranging apparatus 100 is accommodated within the shell 66. The shell 66 may be arranged with a first through-hole 661, a second through-hole 662, and a third through-hole 663. The first through-hole 661 and the second through-hole 662 may correspond to the first receiving unit 20 and the second receiving unit 30, respectively, the third through-hole 663 may correspond to the laser emitting unit 10, the third through-hole 663 is for allowing the optical signal emitted by the laser emitting unit 10 to emit the inside of the shell 66, the first through-hole 661 is for allowing the optical signal reflected back by the object to be measured to enter the inside of the shell 66 and be received by the first receiving unit 20, and the second through-hole 662 is for allowing the optical signal reflected back by the object to be measured to enter the inside of the shell 66 and be received by the second receiving unit 30. Alternatively, the shell 66 may have a closed structure, that is, the first through-hole 661, the second through-hole 662, and the third through-hole 663 are not arranged, but a solid structure through which laser can penetrate is adopted; in this way, contaminants can be prevented from entering the shell 66.

In some embodiments, the lidar 200 may further include a control panel electrically connected to the laser emitting unit 10, the circuit board 50, and the driving apparatus 64. The control panel can be for driving the laser emitting unit 10 to emit laser signal, to transmit the signal through the circuit board 50, and to control the rotation of the rotating plate 62 through the driving apparatus 64. Alternatively, the control board may be integrated with the circuit board 50 as one individual circuit board.

An embodiment of the present disclosure also provides a mobile robot including the lidar 200 provided by any of the embodiments described above.

It should be noted that the description of the present disclosure and the accompanying drawings show preferred embodiments of the present disclosure, but the present disclosure can be implemented in many different forms and is not limited to the preferred embodiments described herein. These preferred embodiments are not intended to be additional limitations on the content of the present disclosure, and the purpose of providing these preferred embodiments is to make the understanding of the disclosure of the present disclosure more thorough and comprehensive. Moreover, the above-mentioned technical features continue to be combined with each other to form various preferred embodiments not listed above, which are all considered to be within the scope of disclosure contained in the description of the present disclosure; further, modifications and alterations will occur to those of ordinary skill in the art in light of the above explanations.

## Claims

1. A ranging apparatus (100), comprising a laser emitting unit (10), a first receiving unit (20), a second receiving unit (30) and a calculating unit (40), wherein
the laser emitting unit (10) configured to emit pulse laser to a target object to be ranged;
the first receiving unit (20) configured to receive the pulse laser reflected from the target object and generate a corresponding first signal;
the second receiving unit (30) configured to receive the pulse laser reflected from the target object and generate a corresponding second signal; and
the calculating unit (40) configured to receive the first signal and the second signal and perform distance calculation and determination according to a triangle ranging principle and a time-of-flight principle, respectively; wherein the first signal is used for calculating and determining a first distance according to the triangle ranging principle; the second signal is used for calculating and determining a second distance according to the time-of-flight principle;
**characterized in that;**
the ranging apparatus further comprises following feature (a) or feature (b):
(a) the ranging apparatus further comprises a circuit board (50), wherein the first receiving unit (20), the second receiving unit (30), and the laser emitting unit (10) are all arranged on the circuit board (50) at different positions;
(b) at least two of the laser emitting unit (10), the first receiving unit (20), and the second receiving unit (30) are arranged on different circuit boards; the ranging apparatus further comprising:
a reflecting mirror (73) configured to reflect the pulse laser reflected from the target object to at least one of the first receiving unit (20) and the second receiving unit (30); wherein
one of the first receiving unit (20) and the second receiving unit (30) is arranged left or right with the laser emitting unit (10);
the other one of the first receiving unit (20) and the second receiving unit (30) is arranged behind the laser emitting unit (10), and the reflecting mirror (73) is configured to reflect the pulse laser reflected from the target object to the other one of the first receiving unit (20) and the second receiving unit (30);
the other one of the first receiving unit (20) and the second receiving unit (30) is placed vertically or obliquely; and
the one of the first receiving unit (20) and the second receiving unit (30), and the laser emitting unit (10) are arranged on the same circuit board or different circuit boards.

2. The ranging apparatus (100) according to claim 1, **characterized in that**:
the first receiving unit (20) and the second receiving unit (30) are arranged on two sides of the laser emitting unit (10); or
the first receiving unit (20) and the second receiving unit (30) are arranged on the same side of the laser emitting unit (10).

3. The ranging apparatus (100) according to claim 1, **characterized in that** the calculating unit (40) is configured to:
analyze the first signal according to the triangle ranging principle to get to know the first distance between the target object and the ranging apparatus, and analyze the second signal according to the time-of-flight principle to get to know the second distance between the target object and the ranging apparatus; and
determine a distance between the target object and the ranging apparatus in a weighted manner according to the first distance and the second distance.

4. The ranging apparatus (100) according to claim 1, **characterized in that**:
an optical axis (X3) of the laser emitting unit (10) and an optical axis (X5) of the second receiving unit (30) are both perpendicular to the circuit board (50);
wherein the ranging apparatus further comprises a first lens (21) allowing the reflected pulse laser to pass through and be projected to the first receiving unit (20).

5. The ranging apparatus (100) according to claim 4, **characterized in that**:
an optical axis (X2) of the first receiving unit (20) is perpendicular to the circuit board (50), an optical axis (X1) of the first lens (21) and the optical axis (X2) of the first receiving unit (20) are parallel and offset, and the optical axis (X2) of the first receiving unit (20) is further away from the optical axis (X3) of the laser emitting unit (10) than the optical axis (X1) of the first lens (21); or
the optical axis (X2) of the first receiving unit (20) is perpendicular to the circuit board (50), and the optical axis (X1) of the first lens (21) intersects with both the optical axis (X2) of the first receiving unit (20) and the optical axis (X3) of the laser emitting unit (10), and the optical axis (X1) of the first lens (21) passes through a receiving surface of the first receiving unit (20); or
the optical axis (X1) of the first lens (21) intersects with the optical axis (X3) of the laser emitting unit (10), and the optical axis (X1) of the first lens (21) passes through and is perpendicular to a receiving surface of the first receiving unit (20).

6. The ranging apparatus (100) according to any one of claims 1 to 5, **characterized in that**:
the ranging apparatus further comprises a second lens (31) allowing the reflected pulse laser to pass through and be projected to the second receiving unit (30);
the ranging apparatus further comprises a third lens (11) for emitted pulse laser to pass; and
the third lens (11) is mounted on a third frame (12), which is fixed to the circuit board (50).

7. The ranging apparatus (100) according to claim 6, **characterized in that**:
the ranging apparatus further comprises a first lens (21) allowing the reflected pulse laser to pass through and be projected to the first receiving unit (20), the first lens (21) is mounted on a first frame (22), and the first frame (22) is mounted on the third frame (12); and/or
the ranging apparatus further comprises a second lens (31) allowing the reflected pulse laser to pass through and be projected to the second receiving unit (30), the second lens (31) is mounted on a second frame (32), and the second frame (32) is mounted on the third frame (12).

8. The ranging apparatus (100) according to any one of claims 1 to 7, **characterized in that**:
the first receiving unit (20) comprises a CMOS or CCD optical sensor; and/or
the second receiving unit (30) comprises a single photon avalanche diode or an avalanche photo diode, or a fast photo diode.

9. The ranging apparatus (100) according to claim 1, **characterized in that**:
the laser emitting unit (10), the first receiving unit (20), and the second receiving unit (30) are respectively arranged on a first circuit board (51), a second circuit board (52), and a third circuit board (53).

10. The ranging apparatus (100) according to claim 9, **characterized in that**:
the ranging apparatus further comprises a mounting structure (70) that holds the first circuit board (51), the second circuit board (52), and the third circuit board (53) relatively fixed; or
the laser emitting unit (10) and the first receiving unit (20) are arranged on a fourth circuit board (54), and the second receiving unit (30) is arranged on a third circuit board (53); and the ranging apparatus further comprises a mounting structure (70) that holds the fourth circuit board (54) and the third circuit board (53) relatively fixed; or
the laser emitting unit (10) and the second receiving unit (30) are arranged on a fifth circuit board (55), and the first receiving unit (20) is arranged on the second circuit board (52); and the ranging apparatus further comprises a mounting structure (70) that holds the fifth circuit board (55) and the second circuit board (52) relatively fixed.

11. The ranging apparatus (100) according to claim 1, **characterized in that**:
one of the first receiving unit (20) and the second receiving unit (30) is arranged up or down with the laser emitting unit (10), and the other of the first receiving unit (20) and the second receiving unit (30) is arranged left or right with the laser emitting unit (10);
the different circuit boards are arranged to be parallel to each other; or, at least two of the different circuit boards are arranged to be non-parallel.

12. A lidar (200), **characterized by** comprising:
the ranging apparatus according to any one of claims 1-11; and
a rotating pan-tilt (60) comprising a base (61), a rotating plate (62), a transmission mechanism (63), and a driving apparatus (64), wherein the rotating plate (62) is rotatably mounted on the base (61), the driving apparatus (64) is mounted on the base (61), the transmission mechanism (63) connects the rotating plate (62) with the driving apparatus (64), and the ranging apparatus is arranged on the rotating plate (62);
wherein the rotating pan-tilt (60) further comprises a shell (66) which is a solid structure capable of transmitting laser light.

13. A mobile robot, **characterized by** comprising the lidar (200) according to claim 12.

## Patentansprüche

1. Entfernungsmessgerät (100), das eine Laseremissionseinheit (10), eine erste Empfangseinheit (20), eine zweite Empfangseinheit (30) und eine Recheneinheit (40) umfasst, wobei
die Laseremissionseinheit (10) dazu konfiguriert ist, Laserimpuls an ein Zielobjekt, dessen Entfernung gemessen werden soll, zu emittieren;
die erste Empfangseinheit (20) dazu konfiguriert ist, den von dem Zielobjekt reflektierten Laserimpuls zu empfangen und ein entsprechendes erstes Signal zu erzeugen;
die zweite Empfangseinheit (30) dazu konfiguriert ist, den von dem Zielobjekt reflektierten Laserimpuls zu empfangen und ein entsprechendes zweites Signal zu erzeugen; und
die Recheneinheit (40) dazu konfiguriert ist, das erste Signal und das zweite Signal zu empfangen und jeweils Entfernungsberechnung und -bestimmung gemäß einem Dreiecksentfernungsprinzip bzw. einem Flugzeitprinzip durchzuführen; wobei das erste Signal zum Berechnen und Bestimmen einer ersten Entfernung gemäß dem Dreiecksentfernungsprinzip verwendet wird; das zweite Signal zum Berechnen und Bestimmen einer zweiten Entfernung gemäß dem Flugzeitprinzip verwendet wird;
**dadurch gekennzeichnet, dass**
das Entfernungsmessgerät ferner das folgende Merkmal (a) oder Merkmal (b) umfasst:
(a) das Entfernungsmessgerät umfasst ferner eine Leiterplatte (50), wobei die erste Empfangseinheit (20), die zweite Empfangseinheit (30) und die Laseremissionseinheit (10) alle auf der Leiterplatte (50) an unterschiedlichen Positionen eingerichtet sind;
(b) mindestens zwei der Laseremissionseinheit (10), der ersten Empfangseinheit (20) und der zweiten Empfangseinheit (30) auf unterschiedlichen Leiterplatten eingerichtet sind; wobei das Entfernungsmessgerät ferner Folgendes umfasst:
einen Reflexionsspiegel (73), der dazu konfiguriert ist, den Laserimpuls, der von dem Zielobjekt reflektiert wird, an mindestens eine der ersten Empfangseinheit (20) und der zweiten Empfangseinheit (30) zu reflektieren; wobei
eine der ersten Empfangseinheit (20) und der zweiten Empfangseinheit (30) links oder rechts mit der Laseremissionseinheit (10) eingerichtet ist;
die andere der ersten Empfangseinheit (20) und der zweiten Empfangseinheit (30) hinter der Laseremissionseinheit (10) eingerichtet ist, und der Reflexionsspiegel (73) dazu konfiguriert ist, den Laserimpuls, der von dem Zielobjekt reflektiert wird, zu der anderen der ersten Empfangseinheit (20) und der zweiten Empfangseinheit (30) zu reflektieren;
die andere der ersten Empfangseinheit (20) und der zweiten Empfangseinheit (30) vertikal oder schräg platziert ist; und
die eine der ersten Empfangseinheit (20) und der zweiten Empfangseinheit (30) und der Laseremissionseinheit (10) auf derselben Leiterplatte oder auf unterschiedlichen Leiterplatten eingerichtet sind.

2. Entfernungsmessgerät (100) nach Anspruch 1, **dadurch gekennzeichnet, dass**:
die erste Empfangseinheit (20) und die zweite Empfangseinheit (30) an zwei Seiten der Laseremissionseinheit (10) eingerichtet sind; oder
die erste Empfangseinheit (20) und die zweite Empfangseinheit (30) auf derselben Seite der Laseremissionseinheit (10) eingerichtet sind.

3. Entfernungsmessgerät (100) nach Anspruch 1, **dadurch gekennzeichnet, dass** die Recheneinheit (40) dazu konfiguriert ist:
das erste Signal gemäß dem Dreiecksentfernungsprinzip zu analysieren, um die erste Entfernung zwischen dem Zielobjekt und dem Entfernungsmessgerät zu erfahren, und das zweite Signal gemäß dem Flugzeitprinzip zu analysieren, um die zweite Entfernung zwischen dem Zielobjekt und dem Entfernungsmessgerät zu erfahren; und
eine Entfernung zwischen dem Zielobjekt und dem Entfernungsmessgerät in einer gewichteten Weise gemäß der ersten Entfernung und der zweiten Entfernung bestimmen.

4. Entfernungsmessgerät (100) nach Anspruch 1, **dadurch gekennzeichnet, dass**:
eine optische Achse (X3) der Laseremissionseinheit (10) und eine optische Achse (X5) der zweiten Empfangseinheit (30) beide zu der Leiterplatte (50) senkrecht stehen;
wobei das Entfernungsmessgerät ferner eine erste Linse (21) umfasst, die es dem reflektierten Laserimpuls erlaubt durchzugehen und zu der ersten Empfangseinheit (20) projiziert zu werden.

5. Entfernungsmessgerät (100) nach Anspruch 4, **dadurch gekennzeichnet, dass**:
eine optische Achse (X2) der ersten Empfangseinheit (20) zu der Leiterplatte (50) senkrecht steht, eine optische Achse (X1) der ersten Linse (21) und die optische Achse (X2) der ersten Empfangseinheit (20) parallel und versetzt sind, und die optische Achse (X2) der ersten Empfangseinheit (20) weiter von der optischen Achse (X3) der Laseremissionseinheit (10) entfernt ist als die optische Achse (X1) der ersten Linse (21); oder
die optische Achse (X2) der ersten Empfangseinheit (20) zu der Leiterplatte (50) senkrecht steht, und die optische Achse (X1) der ersten Linse (21) sowohl die optische Achse (X2) der ersten Empfangseinheit (20) als auch die optische Achse (X3) der Laseremissionseinheit (10) schneidet, und die optische Achse (X1) der ersten Linse (21) durch eine Empfangsoberfläche der ersten Empfangseinheit (20) durchgeht; oder
die optische Achse (X1) der ersten Linse (21) die optische Achse (X3) der Laseremissionseinheit (10) schneidet, und die optische Achse (X1) der ersten Linse (21) durchgeht und zu einer Empfangsoberfläche der ersten Empfangseinheit (20) senkrecht steht.

6. Entfernungsmessgerät (100) nach einem der Ansprüche 1 bis 5, **dadurch gekennzeichnet, dass**:
das Entfernungsmessgerät ferner eine zweite Linse (31) umfasst, die es dem reflektierten Laserimpuls erlaubt durchzugehen und zu der zweiten Empfangseinheit (30) projiziert zu werden;
das Entfernungsmessgerät ferner eine dritte Linse (11) zum Durchgehen für emittierten Laserimpuls umfasst; und
die dritte Linse (11) auf einen dritten Rahmen (12) montiert ist, der an der Leiterplatte (50) befestigt ist.

7. Entfernungsmessgerät (100) nach Anspruch 6, **dadurch gekennzeichnet, dass**:
das Entfernungsmessgerät ferner eine erste Linse (21) umfasst, die es dem reflektierten Laserimpuls erlaubt durchzugehen und zu der ersten Empfangseinheit (20) projiziert zu werden, wobei die erste Linse (21) auf einem ersten Rahmen (22) montiert ist, und der erste Rahmen (22) auf dem dritten Rahmen (12) montiert ist; und/oder
das Entfernungsmessgerät ferner eine zweite Linse (31) umfasst, die es dem reflektierten Laserimpuls erlaubt durchzugehen und zu der zweiten Empfangseinheit (30) projiziert zu werden, wobei die zweite Linse (31) auf einem zweiten Rahmen (32) montiert ist, und der zweite Rahmen (32) auf dem dritten Rahmen (12) montiert ist.

8. Entfernungsmessgerät (100) nach einem der Ansprüche 1 bis 7, **dadurch gekennzeichnet, dass**:
die erste Empfangseinheit (20) einen optischen CMOS- oder CCD-Sensor umfasst; und/oder
die zweite Empfangseinheit (30) eine Einzelphotonen-Avalanche-Diode oder eine Avalanche-Fotodiode oder eine schnelle Fotodiode umfasst.

9. Entfernungsmessgerät (100) nach Anspruch 1, **dadurch gekennzeichnet, dass**:
die Laseremissionseinheit (10), die erste Empfangseinheit (20) und die zweite Empfangseinheit (30) jeweils auf einer ersten Leiterplatte (51), einer zweiten Leiterplatte (52) und einer dritten Leiterplatte (53) eingerichtet sind.

10. Entfernungsmessgerät (100) nach Anspruch 9, **dadurch gekennzeichnet, dass**:
das Entfernungsmessgerät ferner eine Montagestruktur (70) umfasst, die die erste Leiterplatte (51), die zweite Leiterplatte (52) und die dritte Leiterplatte (53) relativ fix hält; oder
die Laseremissionseinheit (10) und die erste Empfangseinheit (20) auf einer vierten Leiterplatte (54) eingerichtet sind, und die zweite Empfangseinheit (30) auf einer dritten Leiterplatte (53) eingerichtet ist; und das Entfernungsmessgerät ferner eine Montagestruktur (70) umfasst, die die vierte Leiterplatte (54) und die dritte Leiterplatte (53) relativ fix hält; oder
die Laseremissionseinheit (10) und die zweite Empfangseinheit (30) auf einer fünften Leiterplatte (55) eingerichtet sind, und die erste Empfangseinheit (20) auf der zweiten Leiterplatte (52) eingerichtet ist; und das Entfernungsmessgerät ferner eine Montagestruktur (70) umfasst, die die fünfte Leiterplatte (55) und die zweite Leiterplatte (52) relativ fix hält.

11. Entfernungsmessgerät (100) nach Anspruch 1, **dadurch gekennzeichnet, dass**:
eine der ersten Empfangseinheit (20) und der zweiten Empfangseinheit (30) mit der Laseremissionseinheit (10) nach oben oder nach unten eingerichtet ist, und die andere der ersten Empfangseinheit (20) und der zweiten Empfangseinheit (30) links oder rechts mit der Laseremissionseinheit (10) eingerichtet ist;
die unterschiedlichen Leiterplatten eingerichtet sind, um zueinander parallel zu sein; oder mindestens zwei der unterschiedlichen Leiterplatten eingerichtet sind, um nicht parallel zu sein.

12. Lidar (200), **dadurch gekennzeichnet, dass** es Folgendes umfasst:
das Entfernungsmessgerät nach einem der Ansprüche 1-11; und
einen Dreh-Schwenk-Neiger (60), der eine Basis (61), eine Drehplatte (62), einen Übertragungsmechanismus (63) und ein Antriebsgerät (64) umfasst, wobei die Drehplatte (62) drehbar an der Basis (61) montiert ist, das Antriebsgerät (64) an der Basis (61) montiert ist, der Übertragungsmechanismus (63) die Drehplatte (62) mit dem Antriebsgerät (64) verbindet, und die Entfernungsmessvorrichtung an der Drehplatte (62) eingerichtet ist;
wobei der Dreh-Schwenk-Neiger (60) ferner ein Gehäuse (66) umfasst, das eine feste Struktur ist, die in der Lage ist, Laserlicht zu übertragen.

13. Mobiler Roboter, **dadurch gekennzeichnet, dass** er das Lidar (200) nach Anspruch 12 umfasst.

## Revendications

1. Dispositif de détermination de distance (100), comprenant une unité d'émission de laser (10), une première unité de réception (20), une deuxième unité de réception (30) et une unité de calcul (40),
l'unité d'émission de laser (10) configurée pour émettre un laser pulsé vers un objet cible dont la distance est à déterminer ;
la première unité de réception (20) configurée pour recevoir le laser pulsé réfléchi provenant de l'objet cible et pour générer un premier signal correspondant ;
la deuxième unité de réception (30) configurée pour recevoir le laser pulsé réfléchi par l'objet cible et pour générer un deuxième signal correspondant ; et
l'unité de calcul (40) configurée pour recevoir le premier signal et le deuxième signal et exécuter le calcul de distance et la détermination selon un principe de triangulation et un principe de temps de parcours, respectivement ; le premier signal étant utilisé pour le calcul et la détermination d'une première distance selon le principe de triangulation ; le deuxième signal étant utilisé pour le calcul et la détermination d'une deuxième distance selon le principe de temps de parcours ;
**caractérisé en ce que ;**
le dispositif de détermination de distance comprend en outre la caractéristique (a) ou la caractéristique (b) suivante :
(a) le dispositif de détermination de distance comprend en outre une carte de circuit imprimé (50), la première unité de réception (20), la deuxième unité de réception (30) et l'unité d'émission de laser (10) étant toutes disposées sur la carte de circuit imprimé (50) dans différentes positions ;
(b) au moins deux de l'unité d'émission de laser (10), de la première unité de réception (20) et de la deuxième unité de réception (30) étant disposées sur différentes cartes de circuit imprimé ; le dispositif de détermination de distance comprenant, en outre, :
un miroir réfléchissant (73) configuré pour réfléchir le laser pulsé réfléchi par l'objet cible vers au moi une de la première unité de réception (20) et de la deuxième unité de réception (30) ;
une de la première unité de réception (20) et de la deuxième unité de réception (30) étant disposée à gauche ou à droite par rapport à l'unité d'émission de laser (10) ;
l'autre de la première unité de réception (20) et de la deuxième unité de réception (30) étant disposée derrière l'unité d'émission de laser (10), et le miroir réfléchissant (73) étant configuré pour réfléchir le laser pulsé réfléchi par l'objet cible vers l'autre de la première unité de réception (20) et de la deuxième unité de réception (30) ;
l'autre de la première unité de réception (20) et de la deuxième unité de réception (30) étant placée verticalement ou obliquement ; et
l'une de la première unité de réception (20) et de la deuxième unité de réception (30), et l'unité d'émission de laser (10) étant disposées sur la même carte de circuit imprimé ou sur différentes cartes de circuit imprimé.

2. Dispositif de détermination de distance (100) selon la revendication 1, **caractérisé en ce que** :
la première unité de réception (20) et la deuxième unité de réception (30) sont disposées sur deux côtés de l'unité d'émission de laser (10) ; ou
la première unité de réception (20) et de la deuxième unité de réception (30) étant disposée à gauche ou à droite de l'unité d'émission de laser (10) .

3. Dispositif de détermination de distance (100) selon la revendication 1, **caractérisé en ce que** l'unité de calcul (40) est configurée pour :
analyser le premier signal selon le principe de triangulation pour connaître la première distance entre l'objet cible et le dispositif de détermination de distance, et analyser le deuxième signal selon le principe de temps de parcours pour connaître la deuxième distance entre l'objet cible et le dispositif de détermination de distance ; et
déterminer la distance entre l'objet cible et le dispositif de détermination de distance d'une manière pondérée selon la première distance et la deuxième distance.

4. Dispositif de détermination de distance (100) selon la revendication 1, **caractérisé en ce que** :
un axe optique (X3) de l'unité d'émission de laser (10) et un axe optique (X5) de la deuxième unité de réception (30) sont tous deux perpendiculaires à la carte de circuit imprimé (50) ;
le dispositif de détermination de distance comprend en outre une première lentille (21) permettant au laser pulsé réfléchi de passer à travers et être projeté vers la première unité de réception (20).

5. Dispositif de détermination de distance (100) selon la revendication 4, **caractérisé en ce que** :
un axe optique (X2) de la première unité de réception (20) est perpendiculaire à la carte de circuit imprimé (50), un axe optique (X1) de la première lentille (21) et l'axe optique (X2) de la première unité de réception (20) sont parallèles et décalés, et l'axe optique (X2) de la première unité de réception (20) est plus éloigné de l'axe optique (X3) de l'unité d'émission de laser (10) que l'axe optique (X1) de la première lentille (21) ; ou
l'axe optique (X2) de la première unité de réception (20) est perpendiculaire à la carte de circuit imprimé (50), et l'axe optique (X1) de la première lentille (21) croise l'axe optique (X2) de la première unité de réception (20) et l'axe optique (X3) de l'unité d'émission de laser (10), et l'axe optique (X1) de la première lentille (21) passe à travers une surface réceptrice de la première unité de réception (20) ; ou
l'axe optique (X1) de la première lentille (21) croise l'axe optique (X3) de l'unité d'émission de laser (10), et l'axe optique (X1) de la première lentille (21) passe à travers et set perpendiculaire à la surface réceptrice de la première unité de réception (20).

6. Dispositif de détermination de distance (100) selon la l'une quelconque revendication 1 à 5, **caractérisé en ce que** :
le dispositif de détermination de distance comprend en outre une deuxième lentille (31) permettant au laser pulsé réfléchi de passer à travers et être projeté vers la deuxième unité de réception (30) ;
le dispositif de détermination de distance comprend en outre une troisième lentille (11) pour être traversée par le laser pulsé émis ; et
la troisième lentille (11) est montée sur un troisième cadre (12), lequel est fixé à la carte de circuit imprimé (50).

7. Dispositif de détermination de distance (100) selon la revendication 6, **caractérisé en ce que** :
le dispositif de détermination de distance comprend en outre une première lentille (21) permettant au laser pulsé réfléchi de passer à travers et être projeté vers la première unité de réception (20), la première lentille (21) est montée sur un premier cadre (22), et le premier cadre (22) est monté sur le troisième cadre (12) ; et/ou
le dispositif de détermination de distance comprend en outre une deuxième lentille (31) permettant au laser pulsé réfléchi de passer à travers et être projeté vers la deuxième unité de réception (30), la deuxième lentille (31) est montée sur un deuxième cadre (32), et le sr cadre (32) est monté sur le troisième cadre (12).

8. Dispositif de détermination de distance (100) selon la l'une quelconque revendication 1 à 7, **caractérisé en ce que** :
la première unité de réception (20) comprend un capteur optique CMOS ou CCD ; et/ou
la deuxième unité de réception (30) comprend une diode à avalanche à photon unique ou une photodiode à avalanche ou une photodiode rapide.

9. Dispositif de détermination de distance (100) selon la revendication 1, **caractérisé en ce que** :
l'unité d'émission de laser (10), la première unité de réception (20) et la deuxième unité de réception (30) sont disposées respectivement sur une première carte de circuit imprimé (51), une deuxième carte de circuit imprimé (52) et une troisième carte de circuit imprimé (53).

10. Dispositif de détermination de distance (100) selon la revendication 9, **caractérisé en ce que** :
le dispositif de détermination de distance comprend en outre une structure de montage (70) qui maintient la première carte de circuit imprimé (51), la deuxième carte de circuit imprimé (52) et la troisième carte de circuit imprimé (53) relativement fixes ; ou
l'unité d'émission de laser (10) et la première unité de réception (20) sont disposées sur une quatrième carte de circuit imprimé (54), et la deuxième unité de réception (30) est disposée sur une troisième carte de circuit imprimé (53) ; et le dispositif de détermination de distance comprend en outre une structure de montage (70) qui maintient la quatrième carte de circuit imprimé (54) et la troisième carte de circuit imprimé (53) relativement fixes ; ou
l'unité d'émission de laser (10) et la deuxième unité de réception (30) sont disposées sur une cinquième carte de circuit imprimé (55), et la première unité de réception (20) est disposée sur la deuxième carte de circuit imprimé (52) ; et le dispositif de détermination de distance comprend en outre une structure de montage (70) qui maintient la cinquième carte de circuit imprimé (55) et la deuxième carte de circuit imprimé (52) relativement fixes.

11. Dispositif de détermination de distance (100) selon la revendication 1, **caractérisé en ce que** :
une de la première unité de réception (20) et de la deuxième unité de réception (30) est disposée en haut ou en bas par rapport à l'unité d'émission de laser (10) et l'autre de la première unité de réception (20) et de la deuxième unité de réception (30) est disposée à gauche ou à droite par rapport à l'unité d'émission de laser (10) ;
les différentes cartes de circuit imprimé sont disposées de façon à être parallèles les unes par rapport aux autres ; ou au moins deux des différentes cartes de circuit imprimé sont disposées de façon à être non parallèles.

12. Lidar (200), **caractérisé en ce qu'**il comprend :
le dispositif de détermination de distance selon la l'une quelconque revendication 1 à -11; et
un panoramique inclinable rotatif (60) comprenant une base (61), une plaque rotative (62), un mécanisme de transmission (63) et un dispositif d'entraînement (64), la plaque rotative (62) étant montée à rotation sur la base (61), le dispositif d'entraînement (64) étant monté sur la base (61), le mécanisme de transmission (63) connectant la plaque rotative (62) au dispositif d'entraînement (64) et le dispositif de détermination de distance étant disposé sur la plaque rotative (62) ;
le panoramique inclinable rotatif (60) comprenant en outre une coque (66), laquelle est une structure solide capable de transmettre de la lumière laser.

13. Robot mobile, **caractérisé en ce qu'**il comprend le lidar (200) selon la revendication 12.
